# EUROPEAN PATENT SPECIFICATION

(11) **EP 3 614 204 B1**
(45) Date of publication and mention of the grant of the patent: **22.11.2023**
(21) Application number: 18787114.0
(22) Date of filing: 10.04.2018
(51) Int. Cl.: G03B 30/00, G03B 17/02, G02B 7/02, G03B 35/08, H04N 23/55, H04N 23/57

(54) **IMAGING DEVICE**
BILDGEBUNGSVORRICHTUNG
DISPOSITIF D'IMAGERIE

(30) Priority: 21.04.2017 JP 2017084118
(43) Date of publication of application: 26.02.2020
(73) Proprietor: Hitachi Astemo, Ltd., Hitachinaka-shi, Ibaraki 312-8503 (JP)
(72) Inventor: KATOU Seiichi, Tokyo 100-8280 (JP); KAZAMA Atsushi, Tokyo 100-8280 (JP); SHINOHARA Hidenori, Hitachinaka-shi Ibaraki 312-8503 (JP); TAKEUCHI Kenichi, Hitachinaka-shi Ibaraki 312-8503 (JP)
(74) Representative: MERH-IP Matias Erny Reichl Hoffmann Patentanwälte PartG mbB
(86) International application number: PCT/JP2018/014995
(87) International publication number: WO 2018/193903

(56) References cited:
- EP-A1- 2 285 094
- JP-A- 2006 091 464
- JP-A- 2008 070 790
- JP-A- 2008 261 974
- JP-A- 2012 155 102
- JP-A- 2016 014 564
- JP-A- 2016 039 428
- JP-A- 2016 127 581
- US-A1- 2014 160 284
- US-A1- 2015 146 094
- US-A1- 2015 365 569

## Description

### Technical Field

The present invention relates to an imaging device.

### Background Art

In recent years, a driving support system in which an imaging device is mounted on a vehicle, and information for safe traveling is provided to a driver based on ambient environment data at the time of vehicle traveling, acquired by the imaging device, or vehicle control is automatically performed based on the information has been proposed. As the imaging device described above, for example, a stereo-camera device is known, and, for example, a vehicle, a pedestrian, and an obstacle in front of the vehicle are recognized by a pair of imaging elements installed on left and right sides and the imaging device is used for an application such as automatic braking. Therefore, it is necessary to reliably measure a distance from an object.

In the stereo-camera device, a process of extracting a feature point common to a pair of images from information on the images and of calculating the number of pixels in which the position of the feature point is shifted between the pair of images is performed by an integrated circuit, and the distance is calculated. Therefore, if there is a deviation other than the original parallax between the pair of images, an error occurs in the result of distance measurement. Therefore, it is common practice to adjust the optical axes of two cameras with high precision so as to minimize the deviation, or to correct the deviation in the process performed by the integrated circuit.

In the imaging device, when fixing a housing and an imaging element module, in general, fixing is performed by fastening a fixing member while correction of the deviation or the like in the position of the optical axis of the imaging element module, and the rotational direction of the axis is performed by confirming actual images. PTL 1 = JP 2016-208125 A discloses that a camera module (imaging element module) is attached to a housing by a screw. In PTL 2 =
EP 2 285094 A1 an imaging module includes an imaging substrate mounting an imaging device thereon, a resin holder including a substrate securing portion to which the imaging substrate is secured, a lens support barrel supporting a lens at an inside thereof, and a holding portion which protrudes toward a subject from the substrate securing portion and includes a through hole configured to permit retention of the holder in an external structure, a metal securing member disposed at a side of the substrate securing portion of the holder facing a subject, and a metal holding plate including a securing region which is secured to and electrically connected to the securing member, and a holding portion adjacent region which overlaps a part around the through hole of the holding portion and includes a through hole configured to communicate with the through hole. The imaging module can be made lighter in weight, be retained in an external structure with stability, and allows acquisition of high-resolution images. PTL 3 =
JP 2006 091464 A provides an solution on how to reduce labor of an operator, shorten manufacturing time, and secure the reliability of a product at the time of manufacturing the image generator. This is solved by an abutting surface 5ca of a holding member 5 abutted to the inner peripheral surface of the opening 2a of a base member 2 that is in a curved surface shape, such that the operator can adjust the holding member 5 to a free angle or a free position to the base member 2 by adjusting screws 7, 8 and 9 in the state of abutting the abutting surface 5ca to the inner peripheral surface of the opening 2a.

### Citation List

### Patent Literature

PTL 1: JP 2016-208125 A
PTL 2 : EP 2 285 094 A1
PTL 3 : JP 2006 091464 A

### Summary of Invention

### Technical Problem

When the camera module is attached to the housing by a fastening member such as a screw as in the related art, the fastening force of the fastening member is transmitted to the pressurized camera module, which may cause the deviation in rotational direction of the axis and the deviation in the optical axis position at the time of fastening. Therefore, it is difficult to adjust the position of the optical axis with high accuracy, and to eliminate the positional deviation due to the friction between the housing and the imaging element module at the time of fastening.

In addition, when a fastening portion is fastened by a screw or the like, bending is suppressed by the frictional force between a bearing surface of the screw and a holder of the camera module, but there is a possibility that a large thermal stress is generated against temperature change due to ambient temperature or the like, and the fastening portion may slip. The slippage does not always occur stably, and the reproducibility of the deformed shape with respect to temperature change is poor. For this reason, deterioration of reproducibility and drift of the optical axis misalignment and the parallax deviation are caused in the left and right camera modules, and there is a problem of occurrence of an error in the distance measurement which is difficult to correct.

The purpose of the present invention is to provide an imaging device capable of reducing optical axis misalignment from, for instance, thermal deformations due to the differences in thermal expansion at ambient temperature between a housing and an imaging element module.

### Solution to Problem

In order to solve the above-described problem, an imaging device is an imaging device according to claim 1. Dependent claims refer to preferred embodiments of the present invention.

### Advantageous Effects of Invention

According to the present invention, there is provided an imaging device capable of reducing optical axis misalignment from thermal deformations due to the differences in thermal expansion at ambient temperature or the like between a housing and an imaging element module.

Problems, configurations, and effects other than the above are clarified by the following description of the embodiments.

### Brief Description of Drawings

[FIG. 1] FIG. 1 is a configuration diagram of a stereo-camera according to a first embodiment of the present invention. FIG. 1(a) is a perspective view of a front surface side and an upper surface side, and FIG. 1(b) is a perspective view of a rear surface side and a lower surface side.
[FIG. 2] FIG. 2 is a plan view illustrating a state where the stereo-camera of the first embodiment of the present invention is installed in a car.
[FIG. 3] FIG. 3 is an exploded perspective view of the stereo-camera according to the first embodiment of the present invention.
[FIG. 4] FIG. 4 is an exploded perspective view partially illustrating a fastening portion of a housing and a camera module according to the first embodiment of the present invention. FIG. 4(a) is a perspective view seen from a rear side, and FIG. 4(b) is a perspective view seen from a front side.
[FIG. 5] FIG. 5 is a cross-sectional view of an attachment structure of the housing and a holder according to the first embodiment of the present invention. FIG.5(a) is a cross-sectional view taken along line A-A of FIG. 4(b), and FIG. 5(b) is a plan view of FIG. 5(a).
[FIG. 6] FIG. 6 is a schematic view of a deformation by a first adhesive and a schematic view of a deformation by a second adhesive according to the first embodiment of the present invention. FIG. 6(a) is a schematic view of the deformation by the first adhesive, and FIG. 6(b) is a schematic view of the deformation by the second adhesive.
[FIG. 7] FIG. 7 is an exploded perspective view partially illustrating a fastening portion of a housing and a camera module according to a second embodiment of the present invention. FIG. 7(a) is a perspective view seen from a rear side, and FIG. 7(b) is a perspective view seen from a front side.
[FIG. 8] FIG. 8 is a plan view illustrating a holder, a support position, and an adhesion position according to the second embodiment of the present invention.
[FIG. 9] FIG. 9 is a plan view illustrating a holder, a support position, and an adhesion position according to a third embodiment of the present invention.
[FIG. 10] FIG. 10 is a plan view illustrating a holder, a support position, and an adhesion position according to a fourth embodiment of the present invention.
[FIG. 11] FIG. 11 is a plan view for describing a problem associated with a holder, a support position, and an adhesion position according to a fifth embodiment of the present invention, and a schematic view of a deformation.
[FIG. 12] FIG. 12 is a cross-sectional view and a plan view partially illustrating an adhesive structure. FIG. 12(a) is a view illustrating a case where an area exposed to air with respect to the volume of the adhesive is large, and FIG. 12 (b) is a view illustrating a case where an area exposed to air with respect to the volume of the adhesive is small.
[FIG. 13] FIG. 13 is a schematic view illustrating a structure of the holder, a support, and a first adhesive according to the fifth embodiment of the present invention.
[FIG. 14] FIG. 14 is a cross-sectional view and a plan view partially illustrating an adhesive structure according to a sixth embodiment of the present invention.
[FIG. 15] FIG. 15 is a plan view partially illustrating an adhesive structure according to a seventh embodiment of the present invention.
[FIG. 16] FIG. 16 is a perspective view of a camera module 108 according to an eighth embodiment of the present invention.
[FIG. 17] FIG. 17 is a perspective view of a camera module 109 according to a ninth embodiment of the present invention.

### Description of Embodiments

### (First Embodiment)

Hereinafter, embodiments of the present invention will be described with reference to the drawings. In addition, since configurations assigned with the same reference numeral have the same function, unless otherwise stated, the description of the configuration already described is omitted.

In addition, in the necessary drawings, orthogonal coordinate axes consisting of an x-axis, a y-axis, and a z-axis are described in order to clarify the description of the position of each part.

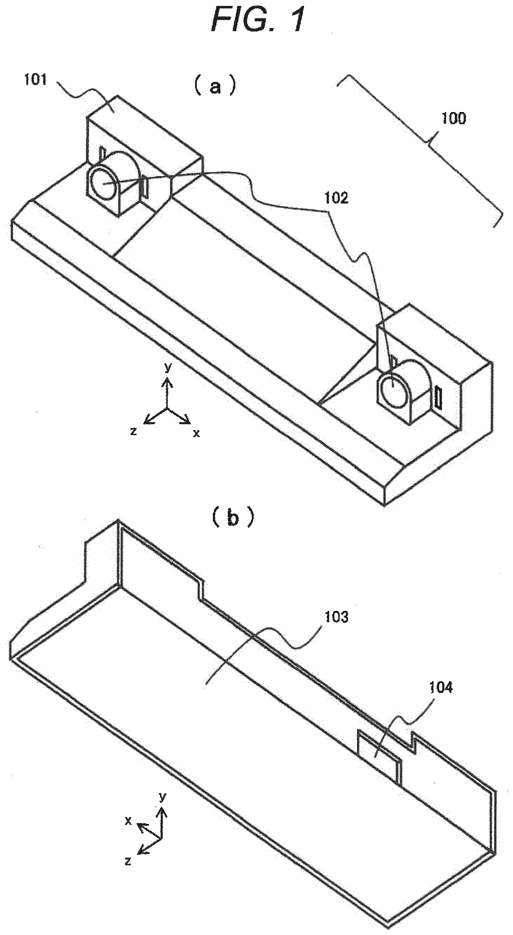

An example of a stereo-camera 100 of the present embodiment will be described. FIGS. 1(a) and 1(b) are configuration diagrams of the stereo-camera 100 according to a first embodiment of the present invention. FIG. 1(a) illustrates a diagram seen from a front surface side and an upper surface side of the stereo-camera 100, and FIG. 1(b) illustrates a diagram seen from a rear surface side and a lower surface side. The stereo-camera 100 according to the present embodiment has a structure in which a pair of camera modules (imaging element modules) 102 are attached to both ends of a housing 101, and a cover 103 covering the rear surface and the lower surface is attached to the housing 101 using a screw or the like. Electrical connection to the stereo-camera 100 is made by connecting wiring to an internal electrical connector 104 via an opening on the rear surface of the cover 103. A distance to an object can be obtained by imaging a front surface side of the stereo-camera 100 by the pair of camera modules 102 and obtaining the parallax of the object from the pair of images. Hereinafter, although the stereo-camera 100 is described as an example, it is not limited to the stereo-camera 100, and, unless otherwise stated, in the present embodiment and other embodiments, the imaging device including at least one camera module such as a monocular camera is included.

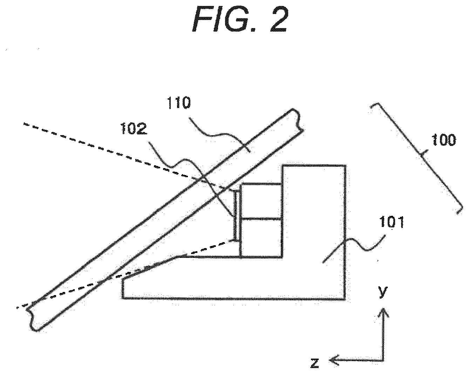

FIG. 2 is a plan view illustrating a state where the stereo-camera 100 of the first embodiment of the present invention is installed in a car. The camera module 102 is installed to be close to an inclined windshield 110, and can recognize the object appearing in a visual field region surrounded by a broken line. As illustrated in FIGS. 1 and 2, a left-right direction connecting the pair of camera modules 102 is referred to as the X-axis, a front-rear direction that is an optical axis direction of the camera module 102 is referred to as the Z-axis, and an up-down direction perpendicular to the X-axis and the Z-axis is referred to as the Y-axis.

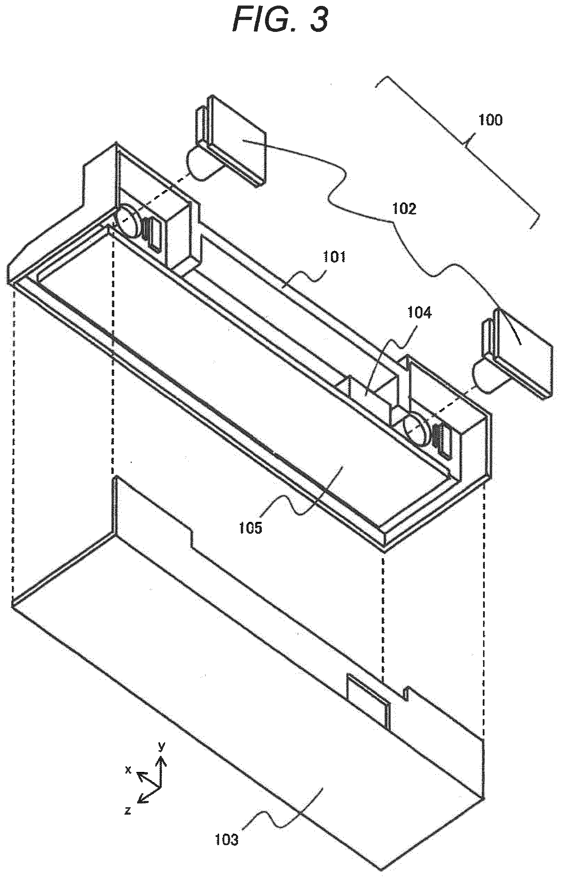

FIG. 3 is an exploded perspective view of the stereo-camera 100 according to the first embodiment of the present invention. The pair of left and right camera modules 102 are fastened to the left and right of the housing 101 via an adhesive (not illustrated) as fastening means. In addition, a circuit board 105 in which a signal processing circuit is formed is provided in the housing 101, and is wired to the outside via the electrical connector 104 mounted on the circuit board 105.

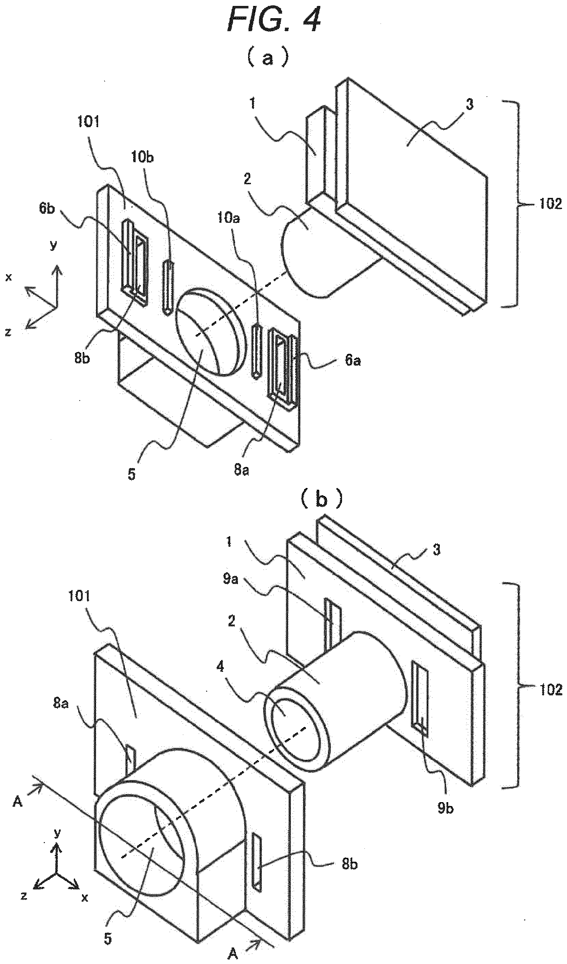

FIG. 4 is an exploded perspective view partially illustrating a fastening portion of the housing 101 and the camera module 102 according to the first embodiment of the present invention, FIG. 4(a) and FIG. 4(b) illustrate the fastening portion by changing the viewpoint direction. The camera module 102 is configured such that a cylindrical lens barrel 2 is connected to a sensor board 3 via a holder 1. A lens 4 is mounted on the lens barrel 2, and an imaging element 15 (not illustrated) is provided on the sensor board 3. The relative positions of the lens 4 and the sensor board 3 are adjusted and fixed such that an image passing through the lens 4 is appropriately focused at the center of the imaging element 15.

In the camera module 102, the lens barrel 2 is inserted into a hole 5 provided in the housing 101, and the holder 1 is supported by two supports 6a and 6b. Holes 8a and 8b for applying first adhesives 7a and 7b (not illustrated) are formed in the vicinity of the lens barrel 2 side of the supports 6a and 6b of the housing 101. The first adhesives 7a and 7b can be applied from a side opposite to a direction in which the holder 1 is disposed with respect to the housing 101. In addition, the holder 1 has grooves 9a and 9b around the lens barrel 2, the housing 101 has projections 10a and 10b to be inserted into the grooves 9a and 9b, and second adhesives 11a and 11b (not illustrated) are applied between the grooves 9a and 9b and the projections 10a and 10b. In a case where a fastening member such as a screw is used when the camera module 102 including the holder 1 is fixed to the housing 101, the deviation in rotational direction of the axis and the deviation in the optical axis position occur due to the pressure (fastening force of the screw). In the present embodiment, such a deviation can be reduced by using an adhesive as fastening means.

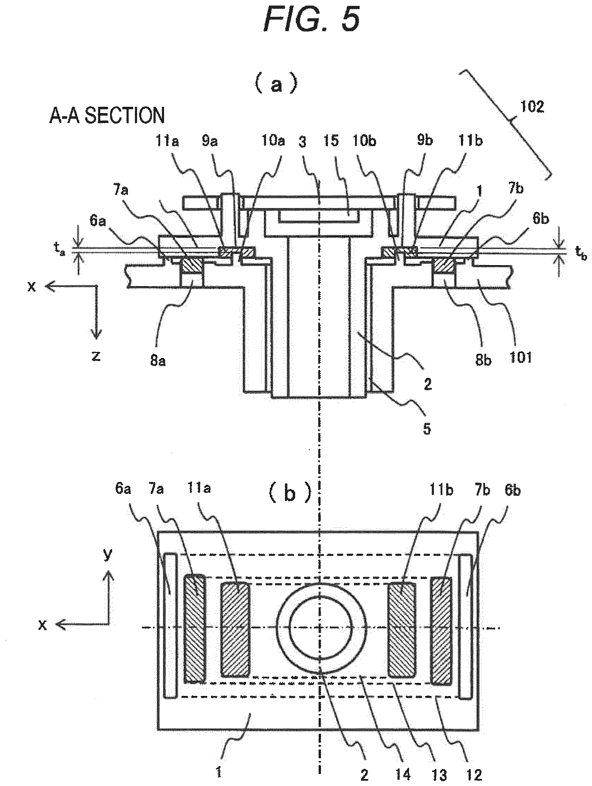

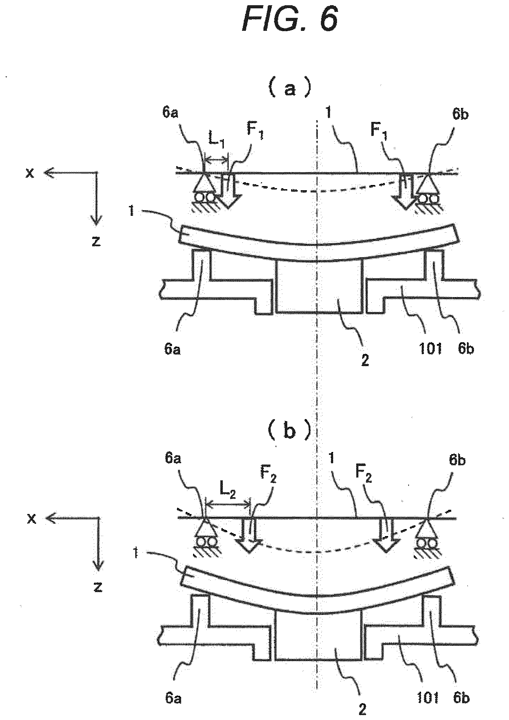

Here, the concept of the present embodiment for changes in the environment such as ambient temperature and humidity will be described using FIG. 5 and FIG 6. FIG. 5(a) is a cross-sectional view of an attachment structure of the housing 101 and the holder 1 according to the first embodiment of the present invention. FIG. 5(b) is a plan view illustrating the holder 1, a support position, and an adhesion position according to the first embodiment of the present invention. The camera module 102 is fastened to the housing 101 via an adhesive as fastening means. The camera module 102 is configured such that the cylindrical lens barrel 2 is connected to the sensor board 3 via the holder 1. The lens 4 is mounted on the lens barrel 2, the imaging element 15 is provided on the sensor board 3, and the relative positions of the lens 4 and the sensor board 3 are adjusted and fixed such that an image passing through the lens 4 is appropriately focused at the center of the imaging element 15.

In the camera module 102, the lens barrel 2 is inserted into the hole 5 provided in the housing 101, and the holder 1 is supported by the two supports 6a and 6b. The holes 8a and 8b for applying the first adhesives 7a and 7b are formed in the vicinity of the lens barrel 2 side of the supports 6a and 6b of the housing 101, and the first adhesives 7a and 7b can be applied from the side opposite to the direction in which the holder 1 is disposed with respect to the housing 101. In addition, the holder 1 has the grooves 9a and 9b around the lens barrel 2, the housing 101 has the projections 10a and 10b to be inserted into the grooves 9a and 9b, and the second adhesives 11a and 11b are applied between the grooves 9a and 9b and the projections 10a and 10b. Here, a thermosetting adhesive is easy to secure performance (adhesive force) for strengthening the fixation between the housing 101 and the holder 1, but since it takes time until the adhesive is cured, two types of adhesives are used such that the first adhesives 7a and 7b are used for temporary fixing, and the second adhesives 11a and 11b are used for main fixing. Therefore, it is sufficient that the first adhesives 7a and 7b have a function of holding the positional relationship between the housing 101 and the holder 1 until the second adhesives 11a and 11b are cured, and by using ultraviolet curable adhesives as the first adhesives 7a and 7b, the first adhesives 7a and 7b can be quickly cured by irradiating the adhesives with ultraviolet rays through the holes 8a and 8b of the housing 101 after adjustment. Thereafter, the thermosetting second adhesives 11a and 11b are used as an adhesive and cured in a thermostatic chamber or the like.

At this time, as illustrated in FIG. 5(b), a first bonding region 13 surrounded by the first adhesives 7a and 7b is closer to the lens barrel 2 side than a support region 12 surrounded by the supports 6a and 6b, and a second bonding region 14 surrounded by the second adhesives 11a and 11b is closer to the lens barrel 2 side than the first bonding region 13. By satisfying the conditions of the support region 12, the first bonding region 13, and the second bonding region 14, a structure is obtained in which the lens barrel 2 has a small tilt, in other words, a lens tilt (optical axis misalignment) is small with respect to environmental changes such as a deformation due to expansion or contraction of the component by the change in ambient temperature, or a deformation due to swelling by humidity or curing shrinkage of the adhesive. Here, the shape of the supports 6a and 6b can be freely set, such as a trapezoidal shape, a semicircular shape, or a slope. Further, the first adhesives 7a and 7b may be an adhesive having a short curing time such as a pressure sensitive type, and the second adhesives 11a and 11b may be a thermosetting type or a moisture curing type.

Further, the housing 101 is placed with the holder 1 facing down, the second adhesives 11a and 11b are applied to the grooves 9a and 9b provided in the holder 1, the projections 10a and 10b of the housing 101 are inserted to the grooves such that portions of gaps tₐ and t_{b} between the bottoms of the grooves 9a and 9b and the projections 10a and 10b, which are thin portions of the adhesive layer, are accurately assembled, and thereby it becomes possible to increase and stabilize the adhesive force between the camera module 102 and the housing 101. Further, by providing the grooves 9a and 9b on the holder side and placing the grooves below, it is possible to prevent the second adhesives 11a and 11b from flowing between the hole 5 of the housing and the lens barrel 2 of the holder, and thus the lens barrel 2 is configured not to be tilted due to a defect. The reason why the lens tilt is small will be described with reference to FIG. 6.

FIG. 6(a) is a schematic view of the deformation by the first adhesives 7a and 7b according to the first embodiment of the present invention, and FIG. 6(b) is a schematic view of the deformation by the second adhesives 11a and 11b according to the first embodiment of the present invention. In the holder 1 supported by the supports 6a and 6b, the holder 1 is deformed by a force F₁ by the first adhesives 7a and 7b. Further, the holder 1 is deformed by a force F₂ by the second adhesives 11a and 11b. When the deformation of the holder 1 by the first adhesives 7a and 7b and the deformation of the holder 1 by the second adhesives 11a and 11b are made in the same direction, the contact between the holder 1 and the housing 101 becomes almost the same, and even if the force F₁ by the first adhesives 7a and 7b or the force F₂ by the second adhesives 11a and 11b changes, the displacement Δz in the z direction in the drawing is changed but the tilt of the lens is small. Here, the force F₁ and the force F₂ are a force due to expansion or contraction of the component by the change in ambient temperature, or a force due to swelling by humidity or curing shrinkage of the adhesive. Accordingly, when the relationship between the supports 6a and 6b, the first adhesives 7a and 7b, and the second adhesives 11a and 11b is satisfied, the lens is configured not to be tilted with respect to the environmental changes. In the stereo-camera 100, since the rotation of the left and right camera modules around the y-axis and the rotation of the left and right camera modules around the x-axis have a great influence on an error in the distance measurement, it is important that the lens tilt (optical axis misalignment) is small with respect to the environmental changes for improving the accuracy of the distance measurement. With this configuration, a stereo-camera is obtained in which the lens tilt can be reduced with respect to the changes in the environment such as the ambient temperature, and the optical axis misalignment can be reduced. By using this stereo-camera, the distance measurement can be realized stably and accurately.

Since the first adhesives 7a and 7b are for temporary fixing, the first adhesives 7a and 7b are preferably close to the supports 6a and 6b in order to reduce the deformation of the holder 1 at the time of curing shrinkage of the adhesive. By setting L₁<L₂ in FIG. 6, it is possible to reduce the deformation at the time of curing shrinkage of the first adhesives 7a and 7b. In other words, the second bonding region 24 may be closer to the lens barrel 14 side than the first bonding region 23.

### (Second Embodiment)

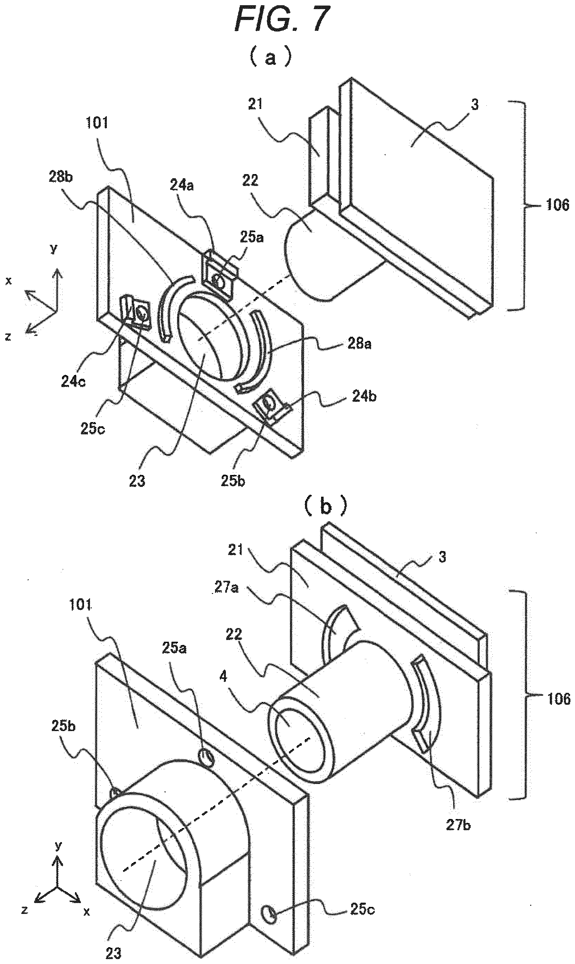

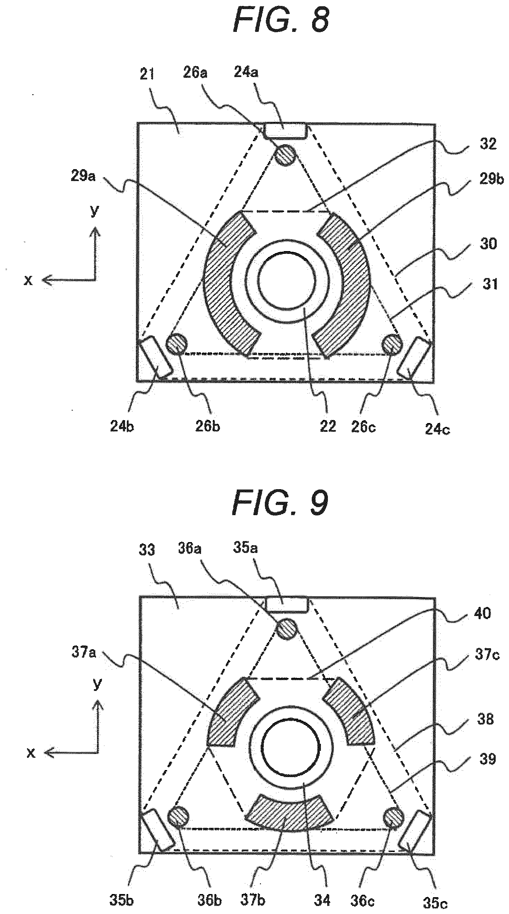

As before, a second embodiment will be described using FIG. 7 and FIG. 8. FIG. 7 is an exploded perspective view partially illustrating a fastening portion of the housing 101 and a camera module 106 according to the second embodiment of the present invention, FIG. 7(a) and FIG. 7(b) illustrate the fastening portion by changing the viewpoint direction.

The camera module 106 is configured such that a cylindrical lens barrel 22 is connected to the sensor board 3 via a holder 21. The lens 4 is mounted on the lens barrel 22, and the imaging element 15 (not illustrated) is provided on the sensor board 3. The relative positions of the lens 4 and the sensor board 3 are adjusted and fixed such that an image passing through the lens 4 is appropriately focused at the center of the imaging element 15.

In the camera module 106, the lens barrel 2 is inserted into the hole 5 formed in the housing 101, and the holder 21 is supported by three supports 24a, 24b, and 24c. Holes 25a, 25b, and 25c for applying first adhesives 26a, 26b, and 26c (not illustrated) are formed in the vicinity of the lens barrel 22 side of the supports 24a, 24b, and 24c of the housing 101, and the first adhesives 26a, 26b, and 26c can be applied from a side opposite to a direction in which the holder 1 is disposed with respect to the housing 101. In addition, the holder 21 has grooves 27a and 27 around the lens barrel 22, the housing 101 has projections 28a and 28b to be inserted into the grooves 27a and 27b, and second adhesives 29a and 29b (not illustrated) are applied between the grooves 27a and 27b and the projections 28a and 28b.

FIG. 8 is a plan view illustrating the holder 21, a support position, and an adhesion position according to the second embodiment of the present invention. The holder 21 can be stably supported by evenly disposing the supports 24a, 24b, and 24c at at least three locations around the lens barrel 22. A first bonding region 31 surrounded by at least three locations of the first adhesives 26a, 26b, and 26c is closer to the lens barrel 22 side than a support region 30 surrounded by the supports 24a, 24b, and 24c, and a second bonding region 32 surrounded by the second adhesives 29a and 29b is closer to the lens barrel 22 side than the first bonding region 31. By disposing the first adhesives 26a, 26b, and 26c corresponding to the supports 24a, 24b, and 24c, the support of the holder 21 can be stably performed and the fixation of the second adhesives 29a and 29b can be stabilized. By satisfying the conditions of the support region 30, the first bonding region 31, and the second bonding region 32, a structure is obtained in which the lens barrel 22 has a small tilt, in other words, a lens tilt (optical axis misalignment) is small with respect to environmental changes such as a deformation due to expansion or contraction of the component by the change in ambient temperature, or a deformation due to swelling by humidity or curing shrinkage of the adhesive. At this time, when the first bonding region 31 is included 2/3 or more on the lens barrel 22 side of the support region 30, and the second bonding region 32 is included 2/3 or more on the lens barrel 22 side of the first bonding region 31, the deformation of the holder 21 by the first adhesives 26a, 26b, and 26c and the deformation of the holder 21 by the second adhesives 29a and 29b can be made in the same direction, the contact between the holder 21 and the housing 101 becomes almost the same, and thereby a structure in which a lens tilt (optical axis misalignment) is small is obtained. By using this stereo-camera 100, the distance measurement or the like can be realized stably and accurately.

Here, the shapes 26a, 26b, and 26c of the first adhesives and the shapes of the second adhesives 29a and 29b may be any shape such as a cylindrical shape, a rectangular solid, or a fan shape. The lens barrel 22 can be stably attached to a body tube by disposing the shapes of the second adhesives 29a and 29b in a band shape circumferentially around the lens barrel 22. Further, by setting a bonding area of the second adhesives 29a and 29b to be greater than a bonding area of the first adhesives 26a, 26b, and 26c and increasing the adhesive force of the second adhesives 29a and 29b, the fixation between the housing 101 and the holder 21 can be strengthened, and thereby the stereo-camera 100 capable of performing measurement stably and accurately can be realized.

### (Third Embodiment)

FIG. 9 is a plan view illustrating a holder 34, a support position, and an adhesion position according to a third embodiment of the present invention.

The holder 33 can be stably supported by evenly disposing supports 35a, 35b, and 35c at three locations around a lens barrel 34. A first bonding region 39 surrounded by three locations of first adhesives 36a, 36b, and 36c is closer to the lens barrel 34 side than a support region 38 surrounded by the supports 35a, 35b, and 35c, and a second bonding region 40 surrounded by at least three locations of second adhesives 37a, 37b, and 37c is closer to the lens barrel 34 side than the first bonding region 39. By disposing the first adhesives 36a, 36b, and 36c corresponding to the supports 35a, 35b, and 35c, the holder 33 at the time of temporary fixing can be stably held. By providing the second adhesives 37a, 37b, and 37c at at least three locations, the support of the surface of the holder 33 becomes even, and the holder 33 can be stably fixed. At this time, when the first adhesives 36a, 36b, and 36c and the second adhesives 37a, 37b, and 37c are disposed around the lens barrel 34 such that there is no overlapping portion in the circumferential direction, the holder 41 can be evenly fixed without interference by an adhesive application device when the camera module 106 is fixed. By satisfying the conditions of the support region 38, the first bonding region 39, and the second bonding region 40, a structure is obtained in which the lens barrel 34 has a small tilt, in other words, a lens tilt (optical axis misalignment) is small with respect to environmental changes such as a deformation due to expansion or contraction of the component by the change in ambient temperature, or a deformation due to swelling by humidity or curing shrinkage of the adhesive. At this time, when the first bonding region 39 is included 2/3 or more on the lens barrel 34 side of the support region 38, and the second bonding region 40 is included 2/3 or more on the lens barrel 34 side of the first bonding region 39, the deformation of the holder 33 by the first adhesives 36a, 36b, and 36c and the deformation of the holder 33 by the second adhesives 37a, 37b, and 37c can be made in the same direction, the contact between the holder 33 and the housing 101 becomes almost the same, and thereby a structure in which a lens tilt (optical axis misalignment) is small is obtained. By using this stereo-camera 100, the distance measurement or the like can be realized stably and accurately.

### (Fourth Embodiment)

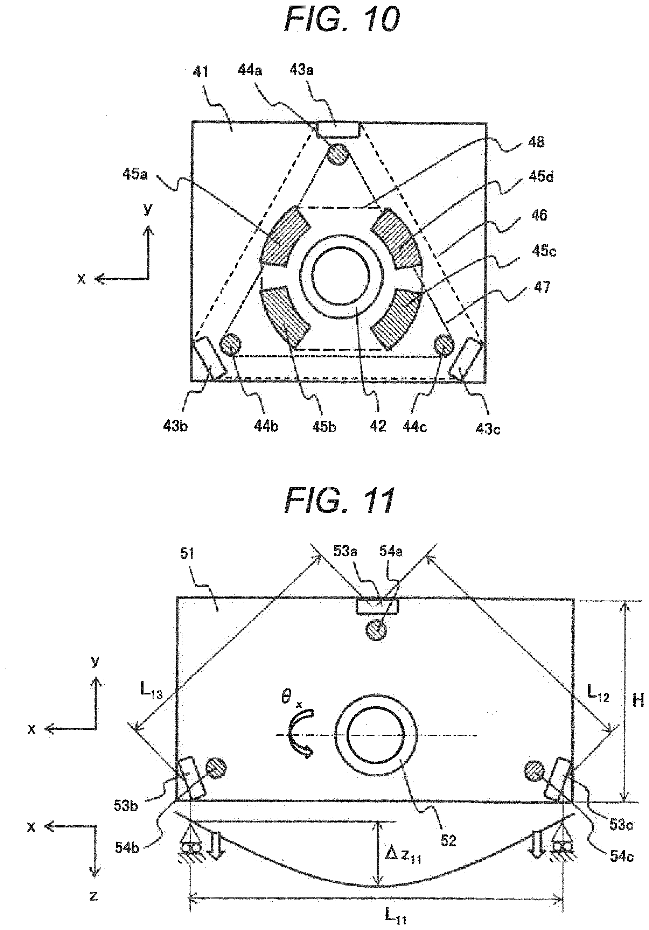

FIG. 10 is a plan view illustrating a holder 41, a support position, and an adhesion position according to a fourth embodiment of the present invention.

The holder 41 can be stably supported by evenly disposing supports 43a, 43b, and 43c at three locations around a lens barrel 42. A first bonding region 47 surrounded by three locations of first adhesives 44a, 44b, and 44c is closer to the lens barrel 42 side than a support region 46 surrounded by the supports 43a, 43b, and 43c, and a second bonding region 48 surrounded by four locations of second adhesives 45a, 45b, 45c, and 45d is closer to the lens barrel 42 side than the first bonding region 47. By disposing the first adhesives 44a, 44b, and 44c corresponding to the supports 43a, 43b, and 43c, the holder 41 at the time of temporary fixing can be stably held. The deformation of the holder 41 by the second adhesives 45a, 45b, 45c, and 45d can be dispersed by providing the second adhesives 45a, 45b, 45c, and 45d at four locations, the stress applied to the end faces of the second adhesives 45a, 45b, 45c, and 45d can be reduced by reducing a bonding area per location, and the holder 41 can be stably fixed. Here, the number of divisions of the second adhesives 45a, 45b, 45c, and 45d can be arbitrarily set.

By satisfying the conditions of the support region 46, the first bonding region 47, and the second bonding region 48, a structure is obtained in which the lens barrel 42 has a small tilt, in other words, a lens tilt (optical axis misalignment) is small with respect to environmental changes such as a deformation due to expansion or contraction of the component by the change in ambient temperature, or a deformation due to swelling by humidity or curing shrinkage of the adhesive. At this time, when the first bonding region 47 is included 2/3 or more on the lens barrel 42 side of the support region 46, and the second bonding region 48 is included 2/3 or more on the lens barrel 42 side of the first bonding region 47, the deformation of the holder 41 by the first adhesives 44a, 44b, and 44c and the deformation of the holder 41 by the second adhesives 45a, 45b, 45c, and 45d can be made in the same direction, the contact between the holder 41 and the housing 101 becomes almost the same, and thereby a structure in which a lens tilt (optical axis misalignment) is small is obtained. By using this stereo-camera 100, the distance measurement or the like can be realized stably and accurately.

### (Fifth Embodiment)

FIG. 11 is a plan view for describing a problem associated with a holder 51, a support position, and an adhesion position according to a fifth embodiment which is not part of the present invention, and a schematic view of a deformation.

Reduction in size and thickness of the stereo-camera 100 may be obtained by changing the positions of supports 53a, 53b, and 53c, and disposing the supports 53a, 53b, and 53c to avoid a lens barrel 52. An example of disposition of the supports 53a, 53b, and 53c corresponding to the reduction in size and thickness of the stereo-camera 100 is illustrated in FIG. 11. By setting a distance L₁₁ between the second support 53b and the third support 53c, among three locations of the supports 53a, 53b, and 53c to be longer than a distance L₁₂ between the second support and the other support and a distance L₁₃ between the third support and the other support and causing the two supports 53b and 53c to overlap the lens barrel 52 in the y direction in the drawing, a height H of the holder can be reduced, and thus it is possible to realize reduction in thickness of a camera module 107 and reduction in size and thickness of the stereo-camera 100. At this time, since the distance L₁₁ is longer than the other two distances L₁₂ and L₁₃, the deformation of the holder progresses, deflection with respect to the same force becomes increased, a deflection amount Δz₁₁ is increased, and the lens barrel 52 is tilted to θₓ.

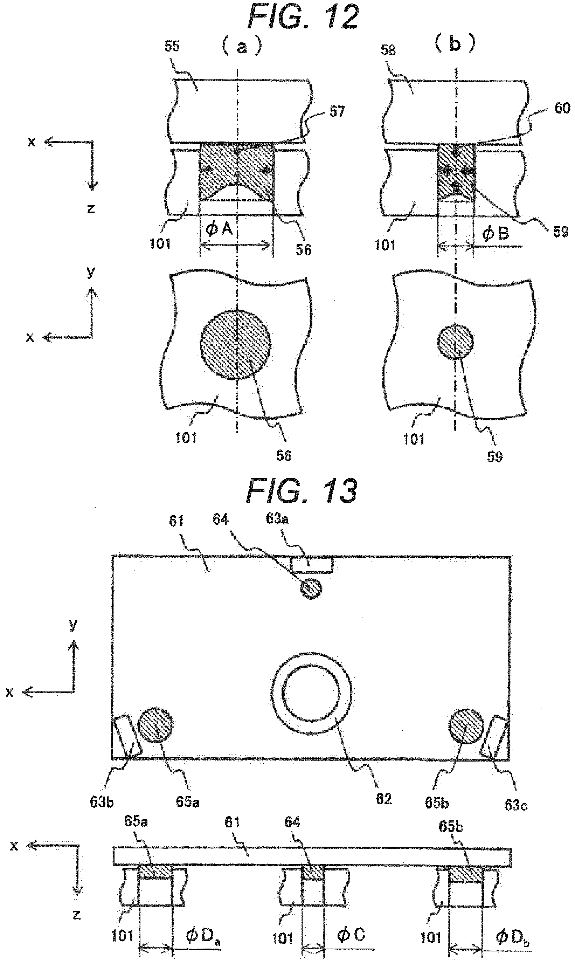

Here, a force received from adhesives 56 and 59 (pressure of the adhesive) will be described with reference to FIG. 12. FIG. 12 is a cross-sectional view and a plan view partially illustrating an adhesive structure. FIG. 12(a) is a view illustrating a case where an area exposed to air (hereinafter, referred to as an "exposed area") with respect to a volume of the adhesive 56 is large, and FIG. 12(b) is a view illustrating a case where an area exposed to air with respect to a volume of the adhesive 59 is small. In a case where the area exposed to air with respect to the volume of the adhesive 56 is large, the portion exposed to air is deformed to absorb the volume change of the contraction or the expansion of the adhesive 56. Therefore, a force 57 (pressure) applied to the adhesive 56 is decreased, and a force on a holder 55 is also decreased. On the other hand, in a case where the area exposed to air with respect to the volume of the adhesive 59 is small, since the portion exposed to air (exposed area) is small, the deformation of the portion exposed to air is reduced so as not to absorb all the volume change of the contraction or the expansion of the adhesive 59, a force 60 (pressure) applied to the adhesive 59 is increased, and a force on a holder 58 is increased.

Using this principle, a structure for reducing the tilt of the lens barrel 52 by unbalance of the supports 53a, 53b, and 53c is illustrated in FIG. 13. FIG. 13 is a schematic view illustrating a structure of a holder 61, supports 63a, 63b, and 63c, and first adhesives 64, 64a, and 64b according to the fifth embodiment of the present invention. By setting a distance between the second support 63b and the third support 63c, among three locations of the supports 63a, 63b, and 63c to be longer than a distance between the second support and the other support and a distance between the third support and the other support and causing the two supports 63b and 63c to overlap a lens barrel 62 in the y direction in the drawing, a height of the holder can be reduced, and thus it is possible to realize reduction in thickness of the camera module 107 and reduction in size and thickness of the stereo-camera 100. Among the positions of the supports 63a, 63b, and 63c, a bonding area of the first adhesive 64 at the first position in the vicinity of the support 63a excluding the supports 63b and 63c constituting a side where the distance between the supports is long is set to be greater bonding areas of the first adhesives 65a and 65b at second and third positions in the vicinity of the other supports 63b and 63c. In FIG. 13, the relationship between a diameter ϕC of the bonding area of the first adhesive 64 at the first position, and diameters ϕDₐ and ϕD_{b} of the bonding areas of the first adhesives 65a and 65c at the second and third positions in the vicinity of the other supports 63b and 63c is ϕC>ϕDₐ, ϕD_{b}. By reducing the bonding area of the first adhesive 64 at the first position, the force applied to the holder 61 from the first adhesive 64 at the first position is increased, and thereby a force to tilt the lens barrel 62 in a direction opposite to the tilt of the lens barrel 62 by the unbalance of the supports 63a, 63b, and 63c is generated. By the difference in the bonding areas of the first adhesives 64, 65a, and 65b, and the positions of the supports 63a, 63b, and 63c, a structure is obtained in which the lens barrel 62 has a small tilt, in other words, a lens tilt (optical axis misalignment) is small, and thus it is possible to realize reduction in thickness of the camera module 107 and reduction in size and thickness of the stereo-camera 100. By using this stereo-camera 100, the distance measurement or the like can be realized stably and accurately.

### (Sixth Embodiment)

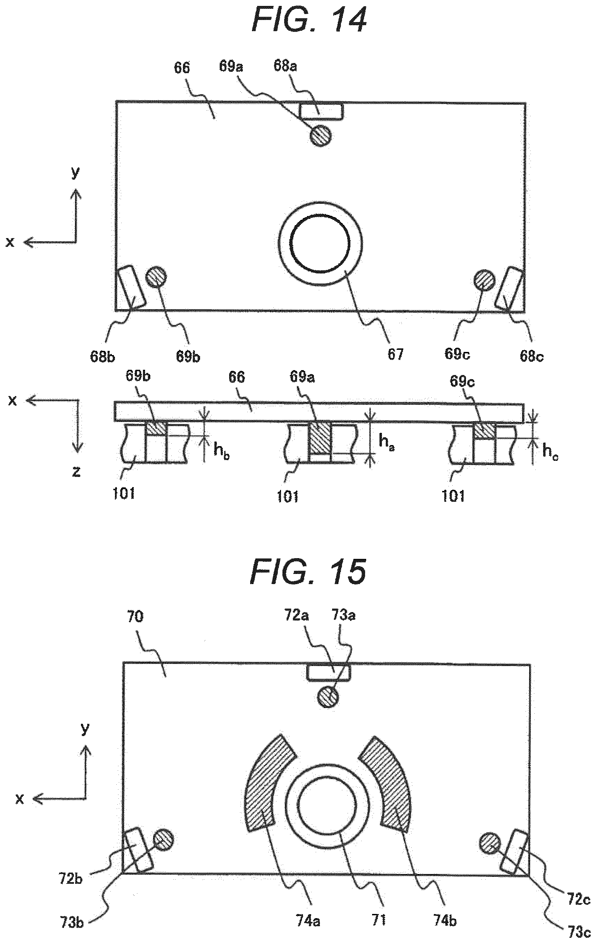

FIG. 14 is a cross-sectional view and a plan view partially illustrating an adhesive structure according to a sixth embodiment which is not part of the present invention. The same effect as the difference in the bonding areas of the first adhesives 64, 65a, and 65b are also obtained by changing the amount of the adhesive. As illustrated in FIG. 11, at the time of positioning supports 68a, 68b, and 68c, an adhesion height hₐ of a first adhesive 69a at the first position in the vicinity of the support 63a excluding the supports 68b and 63c constituting a side where the distance between the supports is long is set to be greater than adhesion heights h_{b} and h_{c} of first adhesives 69b and 69c at second and third positions in the vicinity of the other supports 68b and 68c (hₐ>h_{b}, h_{c}). Here, if the amounts of the first adhesives 69a, 69b, and 69c are set such that the bonding areas thereof are the same and the heights hₐ, h_{b}, and h_{c} of the adhesives are different, the adhesive force of each position of the first adhesives 69a, 69b, and 69c can be made uniform, and a holder 66 can be attached uniformly and stably. By setting the adhesion height hₐ of the first adhesive 69a at the first position to be greater than the heights h_{b} and h_{c} of the other first adhesives, the force applied to the holder 66 from the first adhesive 69a at the first position is increased, and thereby a force to tilt a lens barrel 67 in a direction opposite to the tilt of the lens barrel 67 by the unbalance of the supports 68a, 68b, and 68c is generated. By the adhesion heights of the first adhesives 69a, 69b, and 69c, and the positions of the supports 68a, 68b, and 68c, a structure is obtained in which the lens barrel 67 has a small tilt, in other words, a lens tilt (optical axis misalignment) is small, and thus it is possible to realize reduction in thickness of the camera module 107 and reduction in size and thickness of the stereo-camera 100. Since this effect is caused by the size of the area exposed to air with respect to the volume of the adhesive, any case which causes a difference in the area exposed to air with respect to the volume of the adhesive, such as difference in amount or shape of the adhesive may be used. By using this stereo-camera 100, the distance measurement or the like can be realized stably and accurately.

### (Seventh Embodiment)

FIG. 15 is a plan view partially illustrating an adhesive structure according to a seventh embodiment of the present invention. The same effect as the difference in the bonding areas of the first adhesives 64, 65a, and 65b are also obtained by changing the adhesion positions of second adhesives 74a and 74b. As illustrated in FIG. 15, at the time of positioning supports 72a, 72b, and 72c, second adhesives 74a and 74b are disposed in the vicinity of the support 72a excluding the supports 72b and 72c constituting a side where the distance between the supports is long, to be close to a lens barrel 71. A force applied to a holder 70 from the second adhesives 74a and 74b is increased, and thereby a force to tilt the lens barrel 71 in a direction opposite to the tilt of the lens barrel 71 by the unbalance of the supports 72a, 72b, and 72c and the first adhesives 73a, 73b, and 73c is generated. By the positions of the supports 72a, 72b, and 72c, the positions of the first adhesives 73a, 73b, and 73c, and the positions of the second adhesives 74a and 74b, a structure is obtained in which the lens barrel 71 has a small tilt, in other words, a lens tilt (optical axis misalignment) is small, and thus it is possible to realize reduction in thickness of the camera module 107 and reduction in size and thickness of the stereo-camera 100. By using this stereo-camera 100, the distance measurement or the like can be realized stably and accurately.

### (Eighth Embodiment)

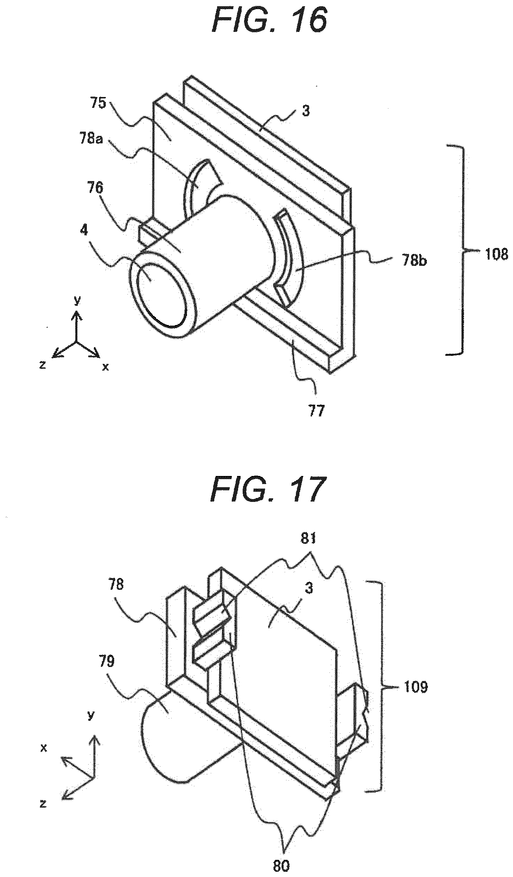

FIG. 16 is a perspective view of a camera module 108 according to an eighth embodiment of the present invention. The tilt of the lens barrel 52 depending on the positions of the supports 53a, 53b, and 53c and the positions of the first adhesives 54a, 54b, 54c illustrated in FIG. 11 is caused by the deformation of the holder 51 when the rigidity of the holder 51 is uniform. Accordingly, if in a holder 75, the rigidity of a portion between a second support and a third support where the distance between the supports is large and the deformation of the holder 75 is large is increased, it is possible to reduce the tilt of a lens barrel 76. FIG. 16 illustrates a shape in which a projection 77 for increasing the rigidity of the holder is provided. By providing the projection 77 to the holder 75, a structure is obtained in which the tilt of the lens barrel 76 by the unbalance of the supports and the positions of the first adhesives is small, in other words, a structure is obtained in which a tilt of a lens 4 (optical axis misalignment) is small, and thus it is possible to realize reduction in thickness of the camera module 108 and reduction in size and thickness of the stereo-camera 100. By using this stereo-camera 100, the distance measurement or the like can be realized stably and accurately. The projection 77 of the holder 75 can be obtained by increasing the plate thickness of the holder 75, providing a rib, or attaching a separated member so as to increase the rigidity of the holder 75.

### (Ninth Embodiment)

FIG. 17 is a perspective view of a camera module 109 according to a ninth embodiment which is not part of the present invention.
The first adhesives 7a and 7b can be replaced with a jig without using the adhesives 7a and 7b for temporary fixing illustrated in FIG. 4. Here, in order to enable the use of the jig, a projection 80 for holding the camera module 109 from the support (not illustrated) to a lens barrel 79 side is provided to a holder 78. A second adhesive (not illustrated) is disposed closer to the lens barrel side than the projections 80. A notch 81 is provided on the projection 80 of the holder 78 toward the lens barrel 79 in order to position and hold the camera module 109 from the outside, and thereby a structure capable of positioning is obtained. The line connecting the notches 81 passes through the center of the lens 4. A structure capable of reducing the lens tilt at the time of adjustment is obtained. Since the projection 80 is a structure for holding the holder 78, the projection 80 may be a cylinder, a rectangular parallelepiped, a hole, or the like.

By the arrangement of the second adhesives, the projections 80 for holding the holder 78, and the supports, a structure is obtained in which the lens barrel 79 has a small tilt, in other words, a tilt of the lens 4 (optical axis misalignment) is small. By using this stereo-camera 100, the distance measurement or the like can be realized stably and accurately.

The respective embodiments described above are described in detail in order to describe the present invention for easy understanding, and are not necessarily limited to those having all the described configurations. In addition, it is possible to replace part of the configuration of a certain embodiment with part of the configuration of other embodiments, and further to add part or all of the configurations of other embodiments to the configuration of a certain embodiment as long as falling under the wording of the appended claims.

### Reference Signs List

- 1: holder
- 2: lens barrel
- 3: sensor board
- 4: lens
- 5: hole
- 6, 6a, 6b: support
- 7: first adhesive
- 8: hole
- 9: groove
- 10: projection
- 11: second adhesive
- 12: support region
- 13: first bonding region
- 14: second bonding region
- 15: imaging element
- 55: holder
- 56: adhesive
- 57: force
- 77: projection
- 80: projection
- 81: notch
- 100: stereo-camera
- 101: housing
- 102: camera module (imaging element module)
- 103: cover
- 104: connector
- 105: circuit board
- 106: camera module
- 107: camera module
- 108: camera module
- 109: camera module
- 110: windshield

## Claims

1. An imaging device comprising:
an imaging element module (100) including a lens barrel (2) and a holder (1) on an outer periphery of the lens barrel (2); and a housing (101) configured to hold the imaging element module (100),
wherein the housing (101) includes a support (6a, 6b) configured to support the holder (1) of the imaging element module (100), and
the holder (1) is held by the housing (101) via a first bonding region (13) surrounded by a first adhesive (7a, 7b) between the support and the lens barrel (2), and a second bonding region (14) surrounded by second adhesive (11a, 11b) located closer to the lens barrel (2) than the first bonding region (13),
**characterized in that**:
the second bonding region (14) is disposed in a band shape on the outer periphery of the lens barrel (2).

2. The imaging device according to claim 1,
wherein the holder (1) includes a groove, the housing (101) includes a projection, and the projection is configured to be inserted into the groove, and
the second bonding region (14) is located between the groove and the projection.

3. The imaging device according to claim 1,
wherein a hole is formed in the housing (101), and the first adhesive (7a, 7b) is applied to the first bonding region (13) through the hole.

4. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14).

5. The imaging device according to claim 4,
wherein the first adhesive (7a, 7b) and the second adhesive (11a, 11b) are disposed not to overlap in a circumferential direction around the lens barrel (2).

6. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14), and
areas which are exposed to air of the first adhesive (7a, 7b) in a vicinity of the supports constituting a longest distance among distances between the supports at the three locations are greater than an area which is exposed to air of the first adhesive (7a, 7b) in a vicinity of the other support.

7. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14), and
application heights of the first adhesive (7a, 7b) in a vicinity of the supports constituting a longest distance among distances between the supports at the three locations are lower than an application height of the first adhesive (7a, 7b) in a vicinity of the other support.

8. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14), and
amounts of the first adhesive (7a, 7b) in a vicinity of the supports constituting a longest distance among distances between the supports at the three locations are greater than an amount of the first adhesive (7a, 7b) in a vicinity of the other support.

9. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14), and
the second adhesive (11a, 11b) is disposed in a vicinity of the supports constituting a longest distance among distances between the supports at the three locations to be close to the lens barrel (2).

10. The imaging device according to claim 1,
wherein the support is provided at three locations, an application portion for the first adhesive (7a, 7b) is provided at three locations of the first bonding region (13), and an application portion for the second adhesive (11a, 11b) is provided at three locations of the second bonding region (14), and
the projection is provided to the holder (1) with respect to the supports constituting a longest distance among distances between the supports at the three locations.

## Patentansprüche

1. Bildgebungsvorrichtung, die Folgendes umfasst:
ein Bildgebungselement-Modul (100), das einen Objektivtubus (2) und einen Halter (1) an einem Außenumfang des Objektivtubus (2) enthält; und ein Gehäuse (101), das konfiguriert ist, das Bildgebungselement-Modul (100) zu enthalten, wobei das Gehäuse (101) einen Träger (6a, 6b) enthält, der konfiguriert ist, den Halter (1) des Bildgebungselement-Moduls (100) zu tragen, und
der Halter (1) durch das Gehäuse (101) mittels eines ersten Verbindungsbereichs (13), der von einem ersten Klebstoff (7a, 7b) umgeben ist, zwischen dem Träger und dem Objektivtubus (2) und eines zweiten Verbindungsbereichs (14), der von einem zweiten Klebstoff (11a, 11b) umgeben ist und näher beim Objektivtubus (2) als der erste Verbindungsbereich (13) angeordnet ist, gehalten wird,
**dadurch gekennzeichnet, dass**
der zweite Verbindungsbereich (14) in einer Bandform am Außenumfang des Objektivtubus (2) angeordnet ist.

2. Bildgebungsvorrichtung nach Anspruch 1, wobei
der Halter (1) eine Nut aufweist, das Gehäuse (101) einen Vorsprung enthält und der Vorsprung konfiguriert ist, in die Nut eingesetzt zu werden, und
der zweite Verbindungsbereich (14) zwischen der Nut und dem Vorsprung angeordnet ist.

3. Bildgebungsvorrichtung nach Anspruch 1, wobei
ein Loch im Gehäuse (101) gebildet ist und der erste Klebstoff (7a, 7b) durch das Loch auf den ersten Verbindungsbereich (13) aufgebracht wird.

4. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist.

5. Bildgebungsvorrichtung nach Anspruch 4, wobei
der erste Klebstoff (7a, 7b) und der zweite Klebstoff (11a, 11b) in einer Umfangsrichtung um den Objektivtubus (2) derart angeordnet sind, dass sie nicht überlappen.

6. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist und
Bereiche des ersten Klebstoffs (7a, 7b), die Luft ausgesetzt sind, in einer Umgebung der Träger, die eine größte Entfernung unter Entfernungen zwischen den Trägern an den drei Orten bilden, größer als ein Bereich des ersten Klebstoffs (7a, 7b), der Luft ausgesetzt ist, in einer Umgebung des weiteren Trägers sind.

7. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist und
Aufbringungshöhen des ersten Klebstoffs (7a, 7b) in einer Umgebung der Träger, die eine größte Entfernung unter Entfernungen zwischen den Trägern an den drei Orten bilden, kleiner als eine Aufbringungshöhe des ersten Klebstoffs (7a, 7b) in einer Umgebung des weiteren Trägers sind.

8. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist und
Mengen des ersten Klebstoffs (7a, 7b) in einer Umgebung der Träger, die eine größte Entfernung unter Entfernungen zwischen den Trägern an den drei Orten bilden, größer als eine Menge des ersten Klebstoffs (7a, 7b) in einer Umgebung des weiteren Trägers sind.

9. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist und
der zweite Klebstoff (11a, 11b) in einer Umgebung der Träger, die eine größte Entfernung unter Entfernungen zwischen den Trägern an den drei Orten bilden, derart angeordnet ist, dass er sich in der Nähe des Objektivtubus (2) befindet.

10. Bildgebungsvorrichtung nach Anspruch 1, wobei
der Träger an drei Orten vorgesehen ist, ein Aufbringungsabschnitt für den ersten Klebstoff (7a, 7b) an drei Orten des ersten Verbindungsbereichs (13) vorgesehen ist und ein Aufbringungsabschnitt für den zweiten Klebstoff (11a, 11b) an drei Orten des zweiten Verbindungsbereichs (14) vorgesehen ist und
der Vorsprung am Halter (1) in Bezug auf die Träger, die eine größte Entfernung unter Entfernungen zwischen den Trägern an den drei Orten bilden, vorgesehen ist.

## Revendications

1. Dispositif d'imagerie comprenant :
un module d'élément d'imagerie (100) incluant un tube de lentille (2) et un moyen de maintien (1) sur une périphérie extérieure du tube de lentille (2) ;
et un boîtier (101) configuré pour maintenir le module d'élément d'imagerie (100),
dans lequel le boîtier (111) inclut un support (6a, 6b) configuré pour supporter le moyen de maintien (1) du module d'élément d'imagerie (100), et
le moyen de maintien (1) est maintenu par le boîtier (101) via une première région de liaison (13) entourée par un premier adhésif (7a, 7b) entre le support et le tube de lentille (2), et une seconde région de liaison (14) entourée par un second adhésif (11a, 11b) située plus près du tube de lentille (2) que la première région de liaison (13),
**caractérisé en ce que** :
la seconde région de liaison (14) disposée dans une forme de bande sur la périphérie extérieure du tube de lentille (2).

2. Dispositif d'imagerie selon la revendication 1,
dans lequel le moyen de maintien (1) inclut une rainure, le boîtier (101) inclut une projection, et la projection est configurée pour être insérée dans la rainure, et
la seconde région de liaison (14) est située entre la rainure et la projection.

3. Dispositif d'imagerie selon la revendication 1,
dans lequel un trou est formé dans le boîtier (101), et le premier adhésif (7a, 7b) est appliqué sur la première région de liaison (13) à travers le trou.

4. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14).

5. Dispositif d'imagerie selon la revendication 4,
dans lequel le premier adhésif (7a, 7b) et le second adhésif (11a, 11b) sont disposés de manière à ne pas se chevaucher dans une direction circonférentielle autour du tube de lentille (2).

6. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14), et
des zones qui sont exposées à l'air du premier adhésif (7a, 7b) dans un voisinage des supports constituant une distance la plus longue parmi des distances entre les supports aux trois emplacements sont plus grandes qu'une zone qui est exposée à l'air du premier adhésif (7a, 7b) dans un voisinage de l'autre support.

7. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14), et
des auteurs d'application du premier adhésif (7a, 7b) dans un voisinage des supports constituant une distance la plus longue parmi des distances entre les supports aux trois emplacements sont plus basses qu'une hauteur d'application du premier adhésif (7a, 7b) dans un voisinage de l'autre support.

8. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14), et
des quantités du premier adhésif (7a, 7b) dans un voisinage des supports constituant une distance la plus longue parmi des distances entre les supports aux trois emplacements sont plus grandes qu'une quantité du premier adhésif (7a, 7b) dans un voisinage de l'autre support.

9. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14), et
le second adhésif (11a, 11b) est disposé dans un voisinage des supports constituant une distance la plus longue parmi des distances entre les supports aux trois emplacements pour être près du tube de lentille (2).

10. Dispositif d'imagerie selon la revendication 1,
dans lequel le support est prévu à trois emplacements, une portion d'application pour le premier adhésif (7a, 7b) est prévue à trois emplacements de la première région de liaison (13), et une portion d'application pour le second adhésif (11a, 11b) est prévue à trois emplacements de la seconde région de liaison (14), et
la projection est prévue sur le moyen de maintien (1) par rapport aux supports constituant une distance la plus longue parmi des distances entre les supports aux trois emplacements.
